# EUROPÄISCHE PATENTSCHRIFT

(11) **EP 0 960 677 B1**
(45) Veröffentlichungstag und Bekanntmachung des Hinweises auf die Patenterteilung: **03.07.2002**
(21) Anmeldenummer: 99107061.6
(22) Anmeldetag: 10.04.1999
(51) Int. Cl.: B23B 31/30, B23Q 11/10

(54) **Spannzylinder mit Kühlungsöffnungen**
Clamping cylinder with cooling openings
Cylindre de serrage avec des trous de refroidissement

(30) Priorität: 28.05.1998 DE 19823823
(43) Veröffentlichungstag der Anmeldung: 01.12.1999
(73) Patentinhaber: Röhm GmbH, 89567 Sontheim (DE)
(72) Erfinder: Röhm, Günter Horst, 89567 Sontheim (DE)
(74) Vertreter: Hentrich, Swen, Dr.

(56) Entgegenhaltungen:
- DE-A- 3 016 088
- FR-A- 2 440 801
- GB-A- 2 034 624
- GB-A- 2 135 606

## Beschreibung

Die Erfindung betrifft einen hydraulisch betätigten Spannzylinder für Spanneinrichtungen an Werkzeugmaschinen, mit einem mit der rotierenden Arbeitsspindel der Werkzeugmaschine koppelbaren Zylindergehäuse und einem in der Zylinderkammer axial verstellbaren, mit einer Spannstange verbundenen Zylinderkolben, sowie mit einem Verteiler, der aus einem feststehenden, die Druckmittelanschlüsse aufweisenden Verteilergehäuse und einer mit dem Zylindergehäuse verbundenen, die Druckmittelleitungen aufweisenden Verteilerwelle besteht, zwischen denen eine mit dem Druckmittel gefüllte Ringspaltdichtung ausgebildet ist (siehe z.B. DE-A-30 16 088).

Bei derartigen, aus der Praxis bekannten Spannzylindern erfolgt insbesondere bei hohen Drehzahlen der Werkzeugmaschine eine große Wärmeentwicklung in der Ringspaltdichtung, was eine ausreichende Kühlung erfordert. Dazu ist bereits vorgeschlagen worden, dem Zylindergehäuse ein Gebläserad zuzuordnen, an dem Gebläseflügel angeordnet sind, mittels denen Kühlluft in eine zwischen Zylindergehäuse und Verteilergehäuse ausgebildete Ringkammer geschaufelt werden kann. Dies führt aber zu einer inakzeptablen Geräuschentwicklung, die einen Einsatz dieser Lösung verhindert.

Der Erfindung liegt daher die Aufgabe zugrunde, einen Spannzylinder der eingangs genannten Art so auszubilden, daß auch bei hohen Drehzahlen die Geräuschentwicklung deutlich reduziert ist.

Diese Aufgabe wird bei einem Spannzylinder der eingangs genannten Art dadurch gelöst, daß im Zylindergehäuse auf der dem Verteilergehäuse zugewandten Seite Kühlöffnungen ausgebildet sind.

Durch die Kühlöffnungen wird die dem Verteilergehäuse zugeführte Luft weniger stark als bei dem Einsatz der Gebläseflügel verwirbelt, was die entsprechenden lauten Strömungsgeräusche mit einer turbinenartigen Lärmentwicklung verhindert. Dabei ist eine ausreichende Kühlleistung erreicht, die eine Überhitzung und damit Beschädigung des Spannzylinders vermeidet.

Zweckmäßigerweise sind dabei die Kühlöffnungen in einem am Zylindergehäuse angeordneten Ringbund ausgebildet, so daß die Orientierung der Achse der Kühlöffnungen frei wählbar ist und nicht zwingend schräg von der Oberseite des Zylindergehäuses zur Seitenfläche verlaufen muß.

Im Rahmen der Erfindung besonders bevorzugt ist eine Ausführungsform, die dadurch gekennzeichnet ist, daß zur Bildung einer Düse die Kühlöffnungen konisch mit sich zum Verteilergehäuse verengendem Querschnitt geformt sind. Dadurch ist erreicht, daß die Kühlluft in den Kühlöffnungen beschleunigt wird, so daß die Reichweite des kühlenden Luftstromes vergrößert ist und auch weiter von dem Zylindergehäuse entfernte Bereiche des Verteilergehäuses angeströmt werden.

Nach einer weiteren Ausführungsform ist vorgesehen, daß die Achse der Kühlöffnungen in der Horizontalebene einen Neigungswinkel mit der Zylinderachse einschließen. Dadurch ist erreicht, daß bei dem mit der Arbeitsspindel umlaufenden Zylindergehäuse die Eintrittsöffnungen der Kühlöffnungen nicht lediglich tangential von der Luft angeströmt werden, sondern daß die Luft geradlinig in die Kühlöffnungen einströmen kann, also wiederum Verwirbelungen an den Kanten der Kühlöffnungen vermieden werden, die zum einen zu einer erhöhten Lärmentwicklung und zu einer verminderten Kühlleistung führen würden.

Da bei Drehmaschinen die Drehrichtung unterschiedlich sein kann, ist im Rahmen der Erfindung weiterhin vorgesehen, daß die Kühlöffnungen zu Paaren zusammengefaßt sind, und daß die eine Kühlöffnung des Paares mit der Zylinderachse einen positiven Neigungswinkel und die andere Kühlöffnung einen negativen Neigungswinkel einschließt. Dies gewährleistet, daß unabhängig von der Drehrichtung stets Kühlöffnungen zur Verfügung stehen, deren Eintrittsöffnung der anströmenden Luft zugeneigt ist. Eine gleichmäßige Kühlung des Verteilergehäuses ist dadurch gefördert, daß die Kühlöffnungen oder die Paare gleichmäßig über den Umfang verteilt am Zylindergehäuse ausgebildet sind.

Um einen innigen Wärmeaustausch zu erreichen, bei dem die Kühlluft das gesamte Verteilergehäuse überstreicht, ist das Verteilergehäuse von einer Luftleithülse übergriffen ist. Kühlrippen sind bekanntermaßen gut geeignet, um den Wärmeaustausch eines Bauteil durch eine vergrößerte Kontaktfläche mit der Umgebung zu verbessern. Im Rahmen der Erfindung ist vorgesehen, daß das Verteilergehäuse Kühlrippen aufweist, die einer Schraubenlinie folgen, deren Steigung mit dem Neigungswinkel der Kühlöffnungen korrespondiert. Dies gewährleistet, daß bei der schräg das Verteilergehäuse anströmenden Luft bei dem Auftreffen auf die Kühlrippen Lärm erzeugende Verwirbelungen vermieden werden und daß weiterhin die Weglänge vergrößert ist, bei der die Kühlluft in Kontakt mit den Kühlrippen steht.

Im folgenden wird die Erfindung an einem in der Zeichnung dargestellten Ausführungsbeispiel näher erläutert; es zeigen:
- Fig. 1: einen aus dem Stand der Technik bekannten Spannzylinder in einem Axialschnitt,

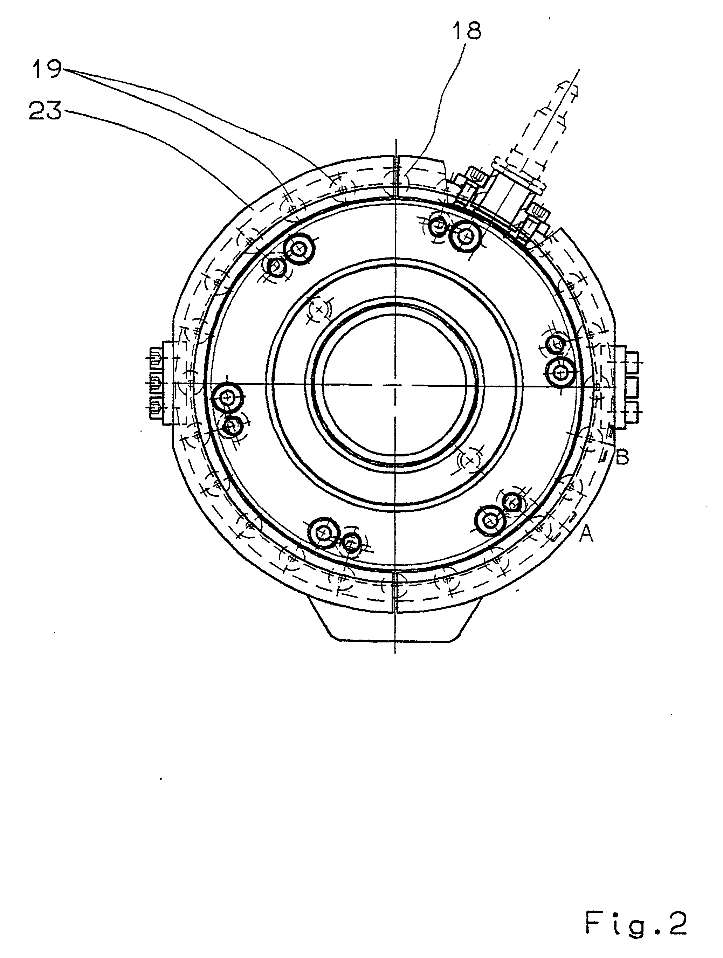

- Fig. 2: einen erfindungsgemäßen Spannzylinder in einem Querschnitt,
- Fig. 3: einen Axialschnitt durch das erfindungsgemäß geänderte Detail des Zylindergehäuses, und

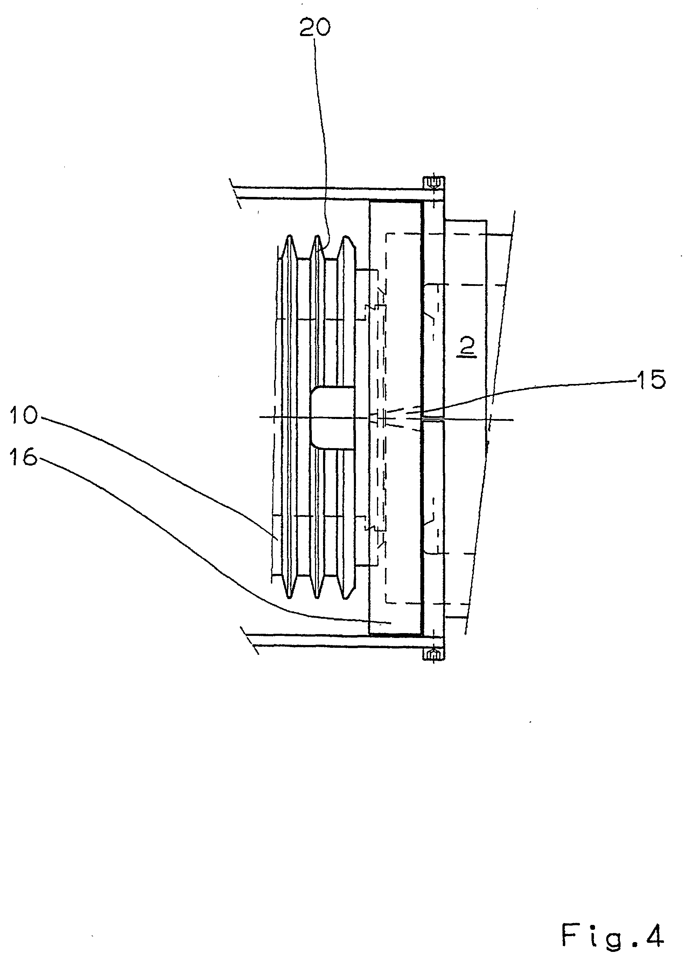

- Fig. 4: eine Draufsicht auf die Kühlrippen, die von der die Kühlöffnungen durchströmenden Luft angeströmt werden.

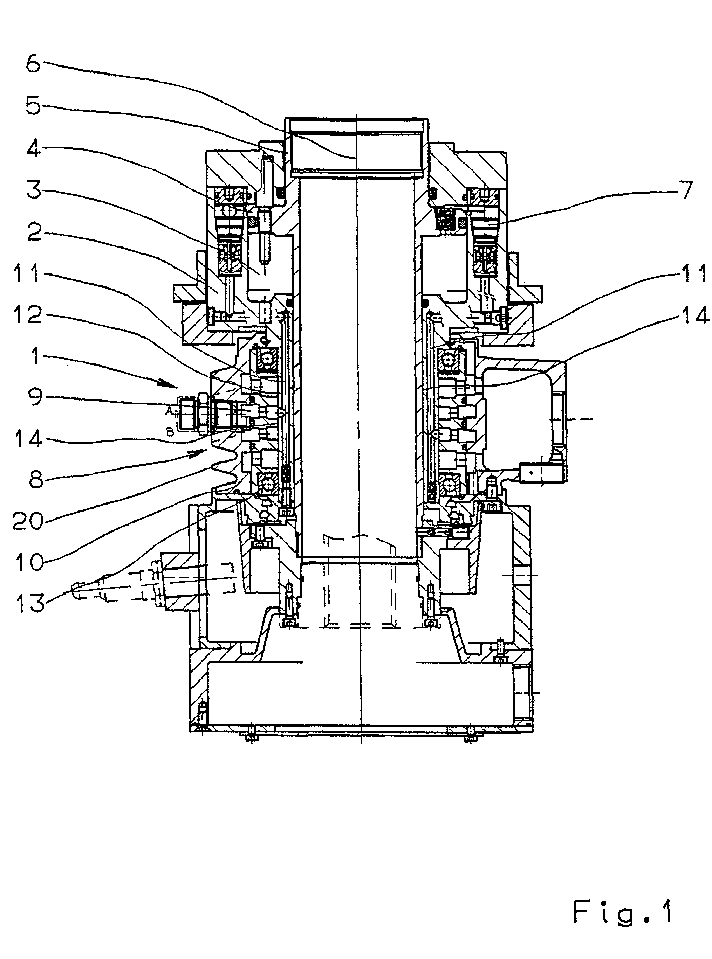

In der Fig. 1 ist ein aus dem Stand der Technik bekannter hydraulisch betätigter Spannzylinder 1 für Spanneinrichtungen an Werkzeugmaschinen gezeigt. Der Spannzylinder 1 besitzt ein mit der nicht dargestellten rotierenden Arbeitsspindel der Werkzeugmaschine in üblicher und hier daher nicht näher beschriebenen Weise gekoppeltes Zylindergehäuse 2, in dessen Zylinderkammer 3 ein Zylinderkolben 4 axial verstellbar gelagert ist. Der Zylinderkolben 4 besitzt auf der in der Zeichnung rechten Seite einen Kragen 5, der durch die spindelseitige Stirnwand des Zylindergehäuses 2 führt und an ein in der hohlen Arbeitsspindel angeordnetes Kraftübertragungsglied, beipielsweise eine Spannstange anschließbar ist. Der Zylinderkolben 4 ist gegen das Zylindergehäuse 2 abgedichtet, so daß die in die Zylinderkammer 3 beidseits des Zylinderkolbens 4 eintretende Druckflüssigkeit nicht entweichen kann. Um außerdem die Druckflüssigkeit in den Zylinderteilräumen gegen unbeabsichtigte Druckverluste zu sichern, sind Sperrventile 7 vorgesehen, die in bekannter Weise funktionieren und hier keiner weiteren Beschreibung bedürfen.

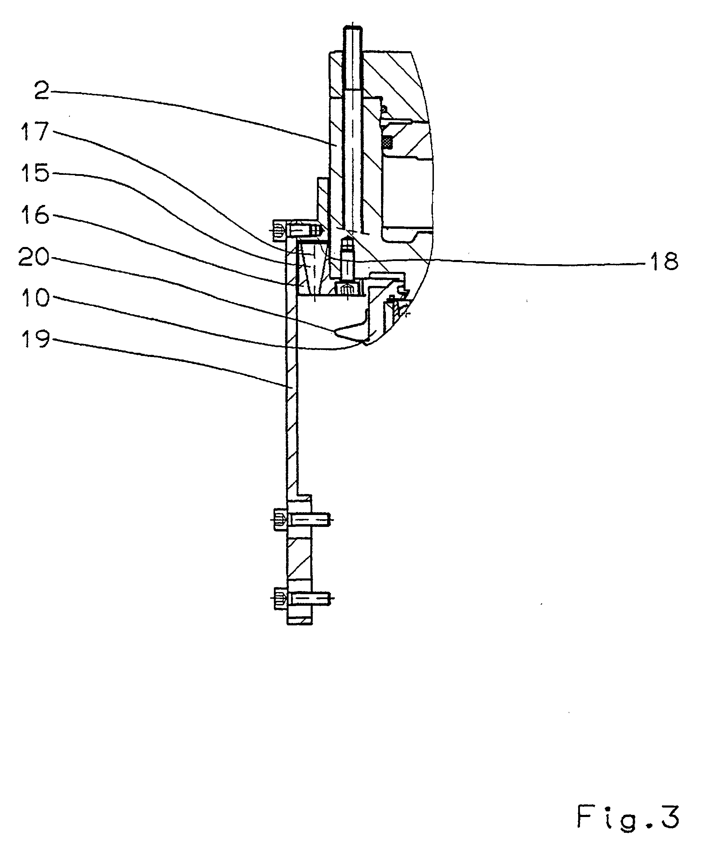

Der Spannzylinder 1 umfaßt weiterhin einen Verteiler 8, der aus einem feststehenden, die Druckmittelanschlüsse 9 aufweisenden Verteilergehäuse 10 und einer mit dem Zylindergehäuse 2 verbundenen und mit diesem umlaufenden, die Druckmittelleitungen 11 aufweisenden Verteilerwelle 12 besteht. Das Verteilergehäuse 10 ist durch Wälzlager 13 auf der Verteilerwelle 12 gelagert. Zwischen der Verteilerwelle 12 und dem Verteilergehäuse 10 ist eine mit dem Druckmittel gefüllte Ringspaltdichtung 14 ausgebildet ist. In dieser Ringspaltdichtung 14 entsteht bei schnelllaufenden Drehmaschinen Reibungswärme, die dadurch abgeführt wird, daß im Zylindergehäuse 2 auf der dem Verteilergehäuse 10 zugewandten Seite Kühlöffnungen 15 angeordnet sind, die in einem am Zylindergehäuse 2 angeordneten Ringbund 16 ausgebildet sind (Fig. 3).

Die Kühlöffnungen 15 weisen zur Bildung einer Düse einen konisch sich zum Verteilergehäuse 10 verengendem Querschnitt auf, wodurch beim Durchströmen durch die Düse die Kühlluft beschleunigt wird. Die Achsen 17 der Kühlöffnungen 15 schließen in der Horizontalebene einen Neigungswinkel mit der Zylinderachse 6 ein, wobei die Kühlöffnungen 15 zu Paaren zusammengefaßt sind und die eine Kühlöffnung 15 des Paares mit der Zylinderachse 6 einen positiven Neigungswinkel und die andere Kühlöffnung 15 einen negativen Neigungswinkel einschließt, um so unabhängig von der Drehrichtung der Drehmaschine die Kühlluft nicht nur tangential an der Eintrittsöffnung 18 der Kühlöffnungen 15 entlang strömen, sondern unmittelbar eintreten zu lassen. Die Kühlöffnungen 15 der Paare sind gleichmäßig über den Umfang verteilt am Zylindergehäuse 2 ausgebildet.

Weiterhin ist das Verteilergehäuse 10 von einer Luftleithülse 19 übergriffen ist und das Verteilergehäuse 10 weist Kühlrippen 20 auf, die einer Schraubenlinie folgen, deren Steigung mit dem Neigungswinkel der Kühlöffnungen 15 korrespondiert, so daß die Kühlluft das Verteilergehäuse 10 über seine gesamte Länge umströmen kann.

## Patentansprüche

1. Hydraulisch betätigter Spannzylinder (1) für Spanneinrichtungen an Werkzeugmaschinen, mit einem mit der rotierenden Arbeitsspindel der Werkzeugmaschine Koppelbaren Zylindergehäuse (2) und einem in der Zylinderkammer (3) axial verstellbaren, mit einer spannstange verbundenen Zylinderkolben (4), sowie mit einem Verteiler (8), der aus einem feststehenden, die Druckmittelanschlüsse (9) aufweisenden Verteilergehäuse (10) und einer mit dem Zylindergehäuse (2) verbundenen, die Druckmittelleitungen (11) aufweisenden Verteilerwelle (12) besteht, zwischen denen eine mit dem Druckmittel gefüllte Ringspaltdichtung (14) ausgebildet ist, **dadurch gekennzeichnet, daß** im Zylindergehäuse (2) auf der dem Verteilergehäuse (10) zugewandten Seite Kühlöffnungen (15) ausgebildet sind.

2. Spannzylinder nach Anspruch 1, **dadurch gekennzeichnet, daß** die Kühlöffnungen (15) in einem am Zylindergehäuse (2) angeordneten Ringbund (16) ausgebildet sind.

3. Spannzylinder nach Anspruch 1 oder 2, **dadurch gekennzeichnet, daß** zur Bildung einer Düse die Kühlöffnungen (15) konisch mit sich zum Verteilergehäuse (10) verengendem Querschnitt geformt sind.

4. Spannzylinder nach einem der Ansprüche 1 bis 3, **dadurch gekennzeichnet, daß** die Achse (17) der Kühlöffnungen (15) in der Horizontalebene einen Neigungswinkel mit der Zylinderachse (6) einschließen.

5. Spannzylinder nach Anspruch 4, **dadurch gekennzeichnet, daß** die Kühlöffnungen (15) zu Paaren zusammengefaßt sind, und daß die eine Kühlöffnung (15) des Paares mit der Zylinderachse (6) einen positiven Neigungswinkel und die andere Kühlöffnung (15) einen negativen Neigungswinkel einschließt.

6. Spannzylinder nach einem der Ansprüche 1 bis 5, **dadurch gekennzeichnet, daß** die Kühlöffnungen (15) oder die Paare gleichmäßig über den Umfang verteilt am Zylindergehäuse (2) ausgebildet sind.

7. Spannzylinder nach einem der Ansprüche 1 bis 6, **dadurch gekennzeichnet, daß** das Verteilergehäuse (10) von einer Luftleithülse (19) übergriffen ist.

8. Spannzylinder nach einem der Ansprüche 4 bis 7, **dadurch gekennzeichnet, daß** das Verteilergehäuse (10) Kühlrippen (20) aufweist, die einer Schraubenlinie folgen, deren Steigung mit dem Neigungswinkel der Kühlöffnungen (15) korrespondiert.

## Claims

1. Hydraulically operated chucking cylinder (1) for work gripping fixtures on machine tools, with a cylinder housing (2) that can be coupled to the rotating work spindle of the machine tool, and with a cylinder piston (4) that can be axially adjusted in the cylinder chamber (3) and is connected to a tension rod, as well as with a distributor (8) which comprises a stationary distributor housing (10) that has the pressure medium connections (9), and a distributor shaft (12) which is connected to the cylinder housing (2) and which has the pressure medium conduits (11), between which is formed an annular gap seal (14) filled with the pressure medium,
**characterised in that**
cooling openings (15) are formed in the cylinder housing (2), on the side facing the distributor housing (10).

2. Chucking cylinder in accordance with claim 1, **characterised in that** the cooling openings (15) are formed in a ring collar (16) arranged on the cylinder housing (2).

3. Chucking cylinder in accordance with claim 1 or 2), **characterised in that** in order to form a nozzle, the cooling openings (15) are formed conically, with a cross section that narrows towards the distributor housing (10).

4. Chucking cylinder in accordance with one of the claims 1 to 3, **characterised in that** the axis (17) of the cooling openings (15) in the horizontal plane enclose an angle of inclination with the cylinder axis (6).

5. Chucking cylinder in accordance with claim 4, **characterised in that** the cooling openings (15) are combined into pairs, and that the one cooling opening (15) of the pair encloses a positive angle of inclination with the cylinder axis (6), and the other cooling opening (15) encloses a negative angle of inclination.

6. Chucking cylinder in accordance with one of the claims 1 to 5, **characterised in that** the cooling openings (15) or the pairs are formed on the cylinder housing (2), such that they are distributed evenly over the perimeter.

7. Chucking cylinder in accordance with one of the claims 1 to 6, **characterised in that** the distributor housing (10) is overlapped by an air guidance casing (19).

8. Chucking cylinder in accordance with one of the claims 4 to 7, **characterised in that** the distributor housing (10) has cooling fins (20) which follow a helical line, whose rise corresponds to the angle of inclination of the cooling openings (15).

## Revendications

1. Cylindre de serrage (1) à actionnement hydraulique pour des dispositifs de serrage sur des machines-outils, comprenant un corps de cylindre (2) susceptible d'être couplé avec la broche de travail tournante de la machine-outil et un piston de cylindre (4) déplaçable axialement dans la chambre de cylindre (3), relié à une barre de serrage, ainsi qu'un distributeur (8) qui se compose d'un corps de distributeur (10) stationnaire, présentant les raccords de fluide sous pression (9), et d'un arbre de distributeur (12) relié au corps de cylindre (2) et présentant les conduites de fluide sous pression (11), entre lesquels est formé un joint à labyrinthe annulaire (14) rempli de fluide sous pression, **caractérisé par le fait que** des ouvertures de refroidissement (15) sont formées dans le corps de cylindre (2) sur le côté tourné vers le corps de distributeur (10).

2. Cylindre de serrage suivant la revendication 1, **caractérisé par le fait que** les ouvertures de refroidissement (15) sont formées dans une couronne annulaire (16) disposée sur le corps de cylindre (2).

3. Cylindre de serrage suivant la revendication 1 ou 2, **caractérisé par le fait que** les ouvertures de refroidissement (15), en vue de la formation d'une buse, sont coniques avec une section qui va en diminuant vers le corps de distributeur (10).

4. Cylindre de serrage suivant l'une des revendications 1 à 3, **caractérisé par le fait que** l'axe (17) des ouvertures de refroidissement (15) fait dans le plan horizontal un angle d'inclinaison avec l'axe (6) du cylindre.

5. Cylindre de serrage suivant la revendication 4, **caractérisé par le fait que** les ouvertures de refroidissement (15) sont groupées par paires et que l'une des ouvertures de refroidissement (15) de la paire fait un angle d'inclinaison positif et l'autre ouverture de refroidissement (15) fait un angle d'inclinaison négatif avec l'axe (6) du cylindre.

6. Cylindre de serrage suivant l'une des revendications 1 à 5, **caractérisé par le fait que** les ouvertures de refroidissement (15) ou les paires sont formées en étant réparties uniformément sur le pourtour du corps de cylindre (2).

7. Cylindre de serrage suivant l'une des revendications 1 à 6, **caractérisé par le fait que** le corps de distributeur (10) est entouré d'une douille de guidage d'air (19).

8. Cylindre de serrage suivant l'une des revendications 4 à 7, **caractérisé par le fait que** le corps de distributeur (10) présente des ailettes de refroidissement (20) suivant une hélice dont le pas correspond à l'angle d'inclinaison des ouvertures de refroidissement (15).
